Europäisches Patentamt

European Patent Office

Office européen des brevets

(11) Publication number: **0 202 792**
A1

# (12) EUROPEAN PATENT APPLICATION

(21) Application number: 86303163.9

(22) Date of filing: 25.04.86

(51) Int. Cl.⁴: **B 28 D 1/10**
**G 21 F 9/34**

(30) Priority: 18.05.85 JP 104953/85

(43) Date of publication of application:
26.11.86 Bulletin 86/48

(84) Designated Contracting States:
DE FR GB

(71) Applicant: Sato Kogyo Co. Ltd.
No. 1-1, Sakuragi-Cho
Toyama-City Toyama-Prefecture(JP)

(72) Inventor: Funakawa, Naoyoshi
No. 19-6, Sengendai Nishi 1-chome
Koshigaya-City Saitama-Prefecture(JP)

(72) Inventor: Demura, Hajime
No. 48-8, Shiba 1-chome
Kawaguchi-City Saitama-Prefecture(JP)

(72) Inventor: Sasaki, Masayoshi
No. 14-22 2-chome Naka-Narusawa-cho
Hitachi-City Ibaragi-Prefecture(JP)

(74) Representative: Godwin, Edgar James et al,
MARKS & CLERK 57-60 Lincoln's Inn Fields
London, WC2A 3LS(GB)

(54) Apparatus for cutting the contaminated surface of concrete.

(57) The cutting apparatus is used at the time of repairing and dismantling aged nuclear facilities. Guide rollers (22) controlling the cutting depth of a cutter (4) are located at a cutting section (A), enabling the concrete surface to be cut only by a depth necessary and enough to remove contaminated portions from the concrete surface.

Fig. 3

EP 0 202 792 A1

Apparatus for cutting the contaminated surface of concrete

The present invention relates to an apparatus for cutting a concrete surface which has been contaminated by radioactive substances and more particularly, it relates to a cutting apparatus used to cut and remove only the contaminated concrete surface layer at the time of repairing and dismantling nuclear facilities.

The number of nuclear facilities increases more and more, but it is apparent that permanent use of these facilities is impossible. It is therefore very important to previously study peripheral techniques relating to the repair and dismantlement of nuclear facilities.

From this viewpoint, we, inventors of the present invention, have studied to prevent workers from being exposed to and contaminated by radioactive substances while to solve the problem of treating a large amount of waste. In the course of this our study, we have filed a Japanese Patent Application 58-153740 (entitled "Method of Removing Contaminated Concrete"), a Japanese Patent Application 58-157406 (entitled "Apparatus for Cutting the Contaminated Surface of Concrete"), and thereafter a Japanese Utility Model Application 59-10292 relating to an improvement of the cutting apparatus.

Thinking on which these prior arts have based is to remove only those portions which have been contaminated by radioactive substances and treat them as the radioactive waste in aged nuclear facilities, while to repair and dismantle the remaining portions as being clean.

The present invention is a link added to the above-mentioned our study and it is intended to improve the cutting apparatus. In the case of the cutting apparatus proposed by the above-mentioned Applications, however, nothing is disclosed on controlling the subtle depth of cutting off contaminated portions from the surface of concrete, although the apparatus has a capacity of cutting the surface of concrete from several millimeters to several centimeters. The depth to which the surface of concrete is contaminated ranges from several millimeters to about 2cm, and when the surface of concrete contaminated is uniformly cut off to the maximum depth, the amount of waste produced increases undesirably. In the case of the cutting apparatus proposed above, moving and directional changing of the cutting blade are achieved same as by the arm mechanism in the power shovel. It is therefore difficult to accurately control the cutting depth, and even those portions of concrete which are not contaminated are cut off, thereby increasing the amount of waste.

According to the present invention, an apparatus for cutting the contaminated surface of concrete is characterized in that a means for controlling the cutting depth of a cutter is located at a cutting section, enabling the concrete surface to be cut only by a depth necessary and enough to remove contaminated portions from the concrete surface although the depth of contaminated concrete changes depending upon various spots on the concrete mass.

The present invention therefore provides a cutting apparatus capable of freely controlling its cutting depth to cut off only contaminated portions from the surface of concrete and thus reduce the amount of waste produced.

The invention will be described further, by way of example, with reference to the accompanying drawings, in which:

Fig. 1 is a diagrammatic side view of apparatus for cutting the contaminated surface of concrete;

Fig. 2 is a plan view of the main portion of a cutting section of the apparatus;

Fig. 3 is a side view of the cutting section; and

Fig. 4 is a front view of the cutting section, showing a cutter and guide rollers.

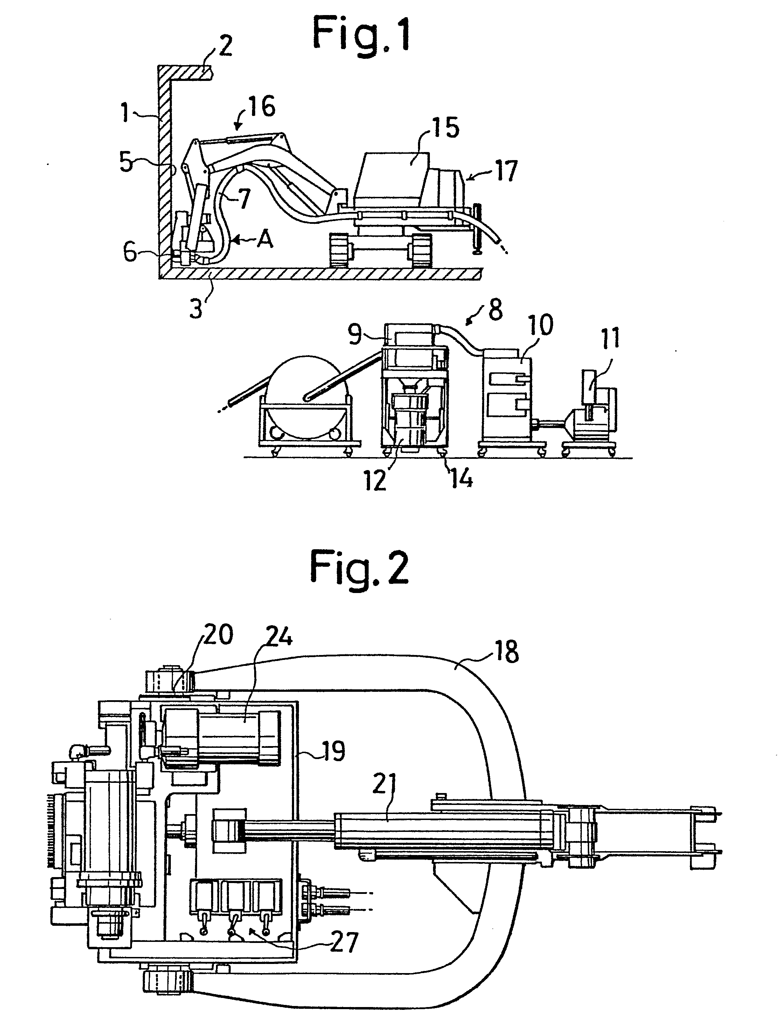

Fig. 1 schematically shows the whole of an apparatus for cutting the contaminated surface of concrete according to the present invention, which is intended to remove contaminated concrete from concrete wall 1, ceiling 2 and floor 3 in nuclear facilities.   In Fig. 1, A represents a cutting section including a cutter 4 and said cutting section serves to cut a concrete surface 5 to remove contaminated portions therefrom.   Powdered particles of contaminated concrete which result from cutting the concrete surface by the cutting section A are collected, without being scattered, into a waste collector means 8 through a hood 6 and a suction pipe 7.

The cutting section A comprising the cutter 4, hood 6, a mechanism for controlling the cutting depth which will be described later, and the like is supported by an arm mechanism 16 which is freely extensible and rotatable and which is mounted on a carrier means 15.   The arm mechanism 16 and a drive means 17 connected have the same arrangement as that in the power shovel or forklift, thereby enabling the cutter 4 to be moved to any desired angle.

The waste collector means 8 includes a bag filter unit 9, second filter unit 10, vacuum unit 11, waste collecting/treating container 12 and the like. The waste collector means 8 which is provided with rollers 14 is freely movable. 15 represents the carrier means intended to support and carry the cutting section A and arm mechanism 16.

The waste collector means 8 is disclosed in detail on the specification and drawings presented by a Japanese Patent Application (entitled "Mechanism for Collecting Radioactive Dust") which was filed on May 5, 1985.

To cut the contaminated surface of concrete according to the system shown in Fig. 1, the carrier means 15 and the arm mechanism 16 cooperate with each other to contact the cutter 4 with the contaminated surface 5 of concrete and then rotate the cutter 4 to cut the contaminated surface 5 of concrete. The contaminated concrete is made powdered particles by this cutting and collected into the container 12 in the waste collector means 8 through the suction pipe 7.

An arrangement of the cutting section A which is an essential matter of the present invention will be described in detail, referring to Figs. 2 through 4.

The cutting section A is freely rotatably attached to the foremost ends of a support arm 18 through a shaft 20 which is fixed to a support frame 19, and it is driven by a hydraulic means 21 to freely change the direction of the cutter 4.

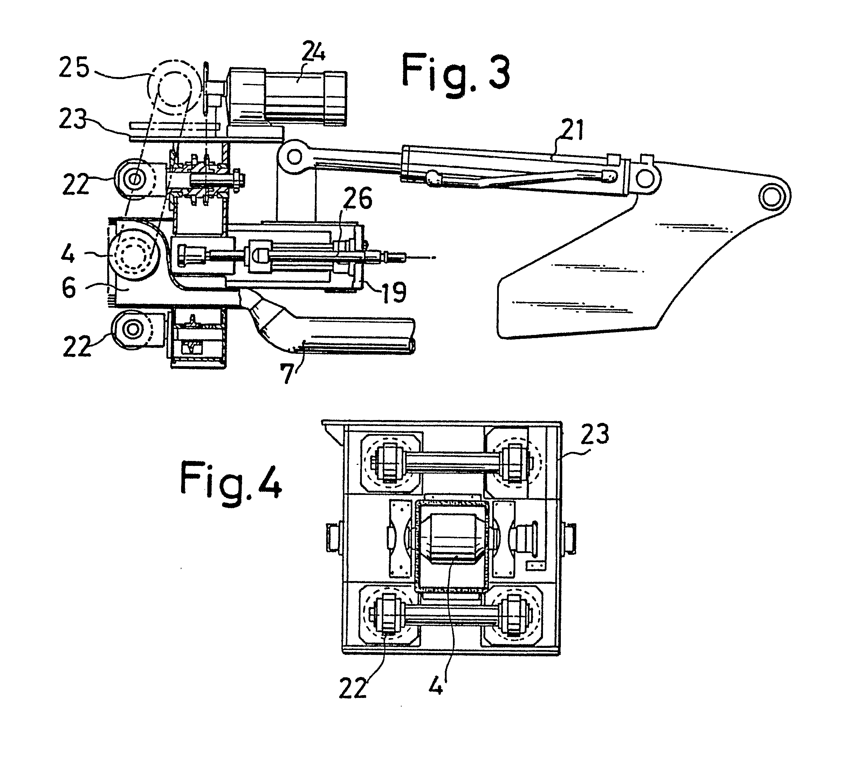

22 represents guide rollers and the cutter 4 is provided with four guide rollers 22 located thereround, as shown in Figs. 3 and 4. Each of these guide rollers 22 is supported by the support frame 19 through a frame 23 and it is under the control of a motor 24 to move about 10mm in right and left directions in Fig. 3. Due to these forward and backward movements of the guide rollers 22, therefore, the cutter 4 is projected and retreated by about 10mm from its position shown in Fig. 3.

The cutter 4 is pivoted on a bearing member fixed to the frame 23, and it is driven by a motor 25.

The frame 23 to which the cutter 4 and guide rollers 22 are attached is movable in relation to the support frame 19 and, as shown in Fig. 3, it is moved in right and left directions in Fig. 3 by means of a hydraulic means 26 whose one end is fixed to the support frame 19. The moving amount and direction of the frame 23 in this case are controlled by limit switches 27 shown in Fig. 2.

The cutter 4 is enclosed by the hood 6 which is provided with a wire brush at the front end portion thereof, and concrete powder cut off from the contaminated surface of concrete is collected, without being scattered, through the suction pipe 7.

According to the contaminated concrete cutting apparatus of the present invention whose cutting section A has the above-described arrangement, the arm mechanism 16 and hydraulic means 21 are rendered operative, causing the whole face of the cutting section A (or cutter 4) to be contacted face to face with the concrete surface which is to be cut off. The hydraulic means 26 is then made operative to strongly press the cutting section A (or cutter 4 and guide rollers 22) against the concrete surface. And the motor 25 is thereafter made operative to rotate the cutter 4, so that the concrete surface cutting can be achieved to a certain depth, which is controlled by the forward and backward movements of the guide rollers 22 driven by the motor 24 relative to the cutter 4.

An embodiment of the present invention has the above-described arrangement, but it should be understood that the present invention can further include the following embodiments.

1) Although the bearing member to which the shaft of each of the guide rollers 22 is attached has been moved forward and backward by the motor 24 to move the guide rollers 22 forward and backward in the case of the above-described embodiment of the present invention, this mechanism for moving the guide rollers 22 forward and backward may be changed variously. The linear reciprocating movement of a hydraulic means, for example, may be used instead of the motor 24 to move the guide rollers forward and backward. The reciprocating movement of this hydraulic means may be converted to rotating movement. Solenoids can be used in the latter case.

2) Although the cutting depth has been determined by the relative positional relationship between the cutter 4 and the guide rollers 22, only the cutter 4 may be moved forward and backward, keeping the guide rollers 22 fixed. To explain it with reference to Fig. 3, the frame 23 for the guide rollers 22 is fixed to the support frame 19; the motor 24 and its related members are not used; a frame to which the cutter 4 and hood 6 are fixed is made movable in relation to the frame 23; and it is moved in right and left directions in Fig. 3 by means of the hydraulic means 26.

3) Although the plane movement of the cutter 4 relative to the concrete surface has been achieved under the control of the arm mechanism 16 and support arm 18, only the cutter 4 or cutter 4 and guide rollers 22 in the cutting section A may be moved in two-dimensional directions at a certain area, without moving the arm mechanism 16 and support arm 18, to achieve more effective cutting operation.   To be more concrete, the frame including the cutter 4, for example, may be moved in two dimensional directions, using guide rails directed in X and Y directions, or this frame may be caused to carry out circumferential movement in relation to the fixed frame.

4) Although the cutting operation of the cutter 4 has been performed at the circumferential portion of a rotating drum, cutters of various types which are used at the site in mine and tunnel, for example, may be employed.   It is not preferable in this case to use the cutter of that type by which a large amount of concrete powder produced by the cutting operation is scattered, making it likely to leave some of the concrete powder not collected.

5) A digital display means for displaying the cutting depth may be arranged.

6) A sensor for detecting the amount of contamination or cutting depth may be arranged in the cutting section and used as a guide for the cutting depth.

According to the embodiments of the present invention which have the above-described arrangements, the cutting depth can be controlled easily and the cutting operation can be achieved with high accuracy. In addition, that portion of concrete which is not to be cut is left not cut, thereby reducing the amount of waste. Further, the face of the cutting section ( or cutter ) is left contacted with the concrete face even when repulsive force is generated at the time cutting operation, thereby enabling the cutting operation to stably and efficiently be achieved wiht high accuracy.

Claims:

1.    Apparatus for cutting the contaminated surface of concrete, comprising cutting section (A) having a cutter (4) by which the contaminated concrete surface is to be cut, characterised in that the cutting section (A) includes means for controlling the cutting depth.

2.    Apparatus as claimed in claim 1, in which the cutting depth is determined by relative positional change between the cutter (4) and guide rollers (22).

3.    Apparatus as claimed in claim 1 or 2, in which forward and backward movements of the cutter (4) and guide rollers (22) are controlled by a motor (24) or hydraulic means.

4.    Apparatus as claimed in any preceding claim, in which the cutting section (A) includes means for pressing at least the cutter (4) against the concrete surface.

5.    Apparatus as claimed in any preceding claim, including an arm mechanism (16) on which the cutting section (A) is mounted and means for moving the cutter in two directions without moving the arm mechanism.

6.     Apparatus as claimed in any preceding claim, including a detector for detecting the cutting depth or the amount of concrete contaminated.

0202792

# Fig.1

# Fig.2

Fig. 3

Fig. 4

European Patent Office

## EUROPEAN SEARCH REPORT

| | DOCUMENTS CONSIDERED TO BE RELEVANT | | EP 86303163.9 | |
|---|---|---|---|---|
| Category | Citation of document with indication, where appropriate, of relevant passages | Relevant to claim | CLASSIFICATION OF THE APPLICATION (Int. Cl. 4) | |
| X | US - A - 4 473 319 (SPANGLER)<br><br>* Fig. 6; column 4, lines 43-53 *<br><br>-- | 1 | B 28 D 1/10<br>G 21 F 9/34 | |
| X | SOVIET INVENTIONS ILLUSTRATED, sections P,Q, week E25, August 4, 1982<br><br>DERWENT PUBLICATIONS LTD., London, Q 42<br><br>* SU-859 555 (GLAVSTROIMEKHANI-ZAT) *<br><br>-- | 1 | | |
| X | SOVIET INVENTIONS ILLUSTRATED, sections P,Q, week B24, July 25, 1979<br><br>DERWENT PUBLICATIONS LTD., London, Q 49<br><br>* SU-619 117 (COAL INDUSTRY PATENT LTD.) *<br><br>-- | 1 | TECHNICAL FIELDS SEARCHED (Int. Cl. 4) | |
| A | SOVIET INVENTIONS ILLUSTRATED, sections P,Q, week 83/31, September 14, 1983<br><br>DERWENT PUBLICATIONS LTD., London, Q 42<br><br>* SU-962 478 (SHILKOV V A) *<br><br>-- | 5 | B 26 D<br>B 28 D<br>E 01 C<br>E 02 F<br>E 04 G<br>E 21 C<br>G 01 B<br>G 21 F | |
| A | DE - A1 - 2 907 738 (TRANSNUCLEAR)<br><br>* Page 3, lines 15-20 *<br><br>-- | | | |

The present search report has been drawn up for all claims

| Place of search | Date of completion of the search | Examiner |
|---|---|---|
| VIENNA | 14-08-1986 | GLAUNACH |

## EUROPEAN SEARCH REPORT

| | DOCUMENTS CONSIDERED TO BE RELEVANT | EP 86303163.9 |

| Category | Citation of document with indication, where appropriate, of relevant passages | Relevant to claim | CLASSIFICATION OF THE APPLICATION (Int. Cl 4) |
|---|---|---|---|
| A | <u>DE - A1 - 2 554 256</u> (L.& C.STEIN-MÜLLER) <br><br> * Page 4, lines 3-6; page 8, lines 23-27 * | | |
| A | <u>US - A - 4 375 212</u> (SANTSCHI) <br><br> * Fig. 1; column 2, lines 48-57 * | | |

**TECHNICAL FIELDS SEARCHED (Int. Cl.4)**

The present search report has been drawn up for all claims

| Place of search | Date of completion of the search | Examiner |
|---|---|---|
| VIENNA | 14-08-1986 | GLAUNACH |